# FASCICULE DE BREVET EUROPEEN

(11) **EP 2 707 762 B1**
(45) Date de publication et mention de la délivrance du brevet: **21.10.2015**
(21) Numéro de dépôt: 12728655.7
(22) Date de dépôt: 11.05.2012
(51) Int. Cl.: G02B 1/10, G02B 27/00, G02B 1/115, G02C 7/02

(54) **ARTICLE D'OPTIQUE COMPORTANT UN REVETEMENT PRECURSEUR D'UN REVETEMENT ANTIBUEE ET UNE COUCHE TEMPORAIRE LE RENDANT APTE AU DEBORDAGE**
OPTISCHER ARTIKEL MIT EINER VORLÄUFERBESCHICHTUNG FÜR EINE BESCHLAGSCHUTZBESCHICHTUNG UND EINER PROVISORISCHEN SCHICHT ZUR EINFASSUNG
OPTICAL ARTICLE COMPRISING A PRECURSOR COATING FOR AN ANTIFOGGING COATING AND A TEMPORARY LAYER RENDERING SAME SUITABLE FOR EDGING

(30) Priorité: 12.05.2011 FR 1154128
(43) Date de publication de la demande: 19.03.2014
(73) Titulaire: Essilor International (Compagnie Générale d'Optique), 94220 Charenton-le-Pont (FR)
(72) Inventeur: HENKY, Francis, F-94220 Charenton Le Pont (FR); THEODEN, Alexis, F-94220 Charenton Le Pont (FR)
(74) Mandataire: Coralis Harle
(86) Numéro de dépôt international: PCT/FR2012/051044
(87) Numéro de publication internationale: WO 2012/153072

(56) Documents cités:
- WO-A1-02/092524
- FR-A1- 2 860 306
- FR-A1- 2 907 915
- FR-A1- 2 921 161
- FR-A1- 2 924 233

## Description

La présente invention s'intéresse au débordage ou taillage d'un article d'optique, plus particulièrement une lentille ophtalmique, revêtu d'un revêtement comportant à sa surface des groupes silanols, dont la surface a été modifiée afin de permettre une application efficace et durable d'une solution antibuée temporaire. La présente invention concerne un tel article ayant été rendu apte au débordage, un procédé de préparation ainsi qu'un procédé de débordage de cet article.

De nombreux supports, tels que des matières plastiques et le verre, présentent l'inconvénient de se recouvrir de buée lorsque la température de leur surface descend au-dessous du point de rosée dé l'air ambiant. C'est le cas notamment du verre que l'on utilise pour former des vitrages pour véhicules de transport ou le bâtiment, des miroirs, des lentilles ophtalmiques telles que des verres de lunettes, etc. La formation de buée sur ces surfaces entraîne une diminution de la transparence, due à la diffusion de la lumière par les gouttes d'eau, ce qui peut provoquer une gêne importante.

Pour éviter la formation de buée dans un environnement très humide, c'est-à-dire la condensation de minuscules gouttelettes d'eau sur un support, il est possible de déposer sur la surface externe de ce support des revêtements hydrophiles, ayant un faible angle de contact statique avec l'eau (typiquement 10° ou moins). Ces revêtements antibuée permanents, dont les propriétés hydrophiles découlent de composés hydrophiles liés de façon permanente à un autre revêtement ou support, agissent comme des éponges vis-à-vis de la buée et permettent aux gouttelettes d'eau d'adhérer à la surface du support en formant un film très fin donnant une sensation de transparence. Ces revêtements, par suite de l'absorption d'eau, gonflent, se ramollissent et deviennent moins résistants mécaniquement.

Une autre solution, permettant de combiner propriétés antireflet et antibuée, consiste à utiliser une couche mince poreuse de bas indice de réfraction, constituée en partie de tensioactifs, lesquels permettent à la couche d'acquérir des propriétés antibuée permanentes.

Des propriétés antibuée peuvent aussi être obtenues en appliquant des solutions temporaires commerciales, disponibles sous forme de spray ou de lingettes, sur des verres de lunettes comportant en tant que couche externe un revêtement antisalissure (hydrophobe et oléophobe). Elles permettent d'obtenir sur une courte période de temps la propriété antibuée, car après quelques essuyages, ces matériaux hydrophiles sont évacués.

Une solution plus intéressante consiste à obtenir un revêtement antibuée par application d'une solution hydrophile temporaire à la surface d'un revêtement précurseur d'un revêtement antibuée, ce qui représente une alternative aux revêtements antibuée permanents.

Il a été décrit dans la demande de brevet français n °10.53269 le dépôt, sur la surface externe d'un article d'optique revêtu d'un revêtement comportant à sa surface des groupes silanols, d'un revêtement hydrophile précurseur d'un revêtement antibuée obtenu par greffage d'un composé organosilane possédant un groupe polyoxyalkylène et au moins un atome de silicium porteur d'au moins un groupe hydrolysable. Le revêtement antibuée proprement dit, qui est un revêtement temporaire, est obtenu après application à la surface du revêtement précurseur d'un surfactant. Le revêtement précurseur du revêtement antibuée a typiquement une épaisseur inférieure ou égale à 5 nm. Cette épaisseur finale peut être obtenue en déposant directement la quantité adéquate de composé organosilane.

Cependant, les inventeurs ont constaté qu'il était préférable de former le revêtement précurseur du revêtement antibuée en déposant un excès de composé organosilane à la surface du revêtement comportant des groupes silanols, et en éliminant l'excès de ce composé déposé mais non greffé, de façon à parvenir à la même épaisseur finale. Les inventeurs ont constaté que lorsque l'on formait directement une couche de composé organosilane greffé ayant une épaisseur qui ne nécessite pas une élimination d'un excès de composé organosilane, on pouvait dans certains cas obtenir un dépôt irrégulier et un revêtement précurseur de revêtement antibuée dont la surface ne possède pas une affinité suffisante vis-à-vis d'une solution liquide de tensioactif, ce qui conduit à un revêtement ne possédant pas les propriétés antibuée recherchées, généralement moins durable. De tels problèmes de reproductibilité doivent impérativement être évités afin que le procédé de production soit industrialisable.

La dernière étape de finition d'un article d'optique tel qu'une lentille ophtalmique est l'opération de débordage ou détourage, qui consiste à usiner la tranche ou la périphérie de la lentille de façon à la conformer aux dimensions requises pour adapter la lentille à la monture de lunette dans laquelle elle est destinée à prendre place.

Le débordage est réalisé généralement sur une meuleuse comprenant des meules diamantées qui effectuent l'usinage tel que défini ci-dessus. La lentille est maintenue, lors de cette opération, par des organes de blocage intervenant axialement. Le mouvement relatif du verre par rapport à la meule est contrôlé, généralement numériquement, afin de réaliser la forme souhaitée. Comme cela apparaît, il est tout à fait impératif que la lentille soit fermement maintenue lors de ce mouvement.

Pour cela, avant l'opération de débordage, on effectue une opération de glantage de la lentille, c'est à dire que l'on vient positionner sur la surface convexe de la lentille un moyen de maintien ou gland. Typiquement, un patin de maintien (ou patin de fixation), tel qu'une pastille autocollante, par exemple un patin adhésif double face, est disposé entre le gland et la surface convexe de la lentille. Le gland auquel adhère la lentille par l'intermédiaire du patin adhésif est alors mécaniquement fixé dans l'axe de montage de la meuleuse et un bras axial vient bloquer la lentille en appliquant une force centrale sur la face de la lentille opposée au gland. Lors de l'usinage, un effort de couple tangentiel est généré sur la lentille, ce qui peut engendrer une rotation de la lentille par rapport au gland si le système de maintien de la lentille n'est pas assez efficace. Le bon maintien de la lentille dépend principalement de la bonne adhérence à l'interface patin de maintien/surface convexe de la lentille.

Les articles d'optique comportant une couche extérieure hydrophobe et/ou oléophobe antisalissure, typiquement à base de matériaux de type fluorosilane, qui présentent une basse énergie de surface (typiquement moins de 14 mJ/m² et généralement inférieure ou égale à 12 mJ/m²), ne peuvent pas être débordés directement car l'adhérence à l'interface patin/surface convexe s'en trouve altérée, ce qui rend difficile des opérations de débordage satisfaisantes.

Les énergies de surface sont mesurées selon le procédé Owens Wendt (Estimation of the surface force energy of polymers Owens D.K., Wendt R.G. (1969) J. APPL. POLYM. SCI, 13,1741-1747).

Lors du débordage, la lentille ne doit pas subir un désaxage supérieur à 2°, de préférence au plus 1 °, et par conséquent l'adhésion du patin sur la surface de la lentille est essentielle à l'obtention d'un débordage satisfaisant. La conséquence d'un glissement de la lentille au cours d'une opération de débordage mal menée est la perte pure et simple de la lentille.

Pour remédier à ces difficultés de débordage des lentilles pourvues d'un revêtement externe hydrophobe et/ou oléophobe, on a proposé de former sur ces revêtements un revêtement temporaire, de nature organique ou minérale, en particulier une couche temporaire de MgF₂, des revêtements pelables de nature polymère ou des films adhésifs temporaires de nature polymère. Ces couches temporaires sont décrites notamment dans les demandes EP 1392613, EP 1633684, WO 2005/015270, WO 03/057641, JP 2004-122238, WO 03/092957.

Les inventeurs ont constaté qu'il était difficile de déborder un article d'optique comportant en tant que couche externe un précurseur de revêtement antibuée déposé en excès, c'est-à-dire dont l'épaisseur est supérieure à celle d'une couche greffée, bien que cette couche ait une énergie de surface élevée. Une telle couche ne permet pas une bonne tenue du patin et entraîne un glissement de l'article pendant l'opération de débordage.

L'objectif de la présente invention est la préparation d'un article d'optique, comportant un revêtement précurseur de revêtement antibuée, d'épaisseur préférentiellement supérieure à 3 nm, qui soit apte au débordage.

L'invention vise également la mise au point d'un procédé de débordage d'articles d'optique revêtus d'un revêtement précurseur de revêtement antibuée, qui soit fiable et garantisse un taux de succès très élevé pour l'opération de débordage, permettant d'éviter tout problème de glissement de la lentille pendant l'opération de débordage en question.

A l'origine de l'invention, les inventeurs ont mis en évidence que le problème constaté lors du débordage des articles d'optique mentionnés ci-dessus vient en fait du dépôt d'un excès de précurseur de revêtement antibuée. On pourrait penser que ce problème peut être résolu en éliminant complètement l'excès de composé précurseur de revêtement antibuée déposé avant de procéder au débordage. Cette solution n'est toutefois pas industriellement satisfaisante, car l'opération d'élimination nécessiterait un nettoyage approfondi de la surface de l'article d'optique pour que le débordage puisse être correctement réalisé, ce qui est techniquement complexe. L'utilisation de films adhésifs (nommés stickers, lorsqu'il s'agit de films de petite taille, supérieure à la taille du patin adhésif et inférieure au diamètre du verre) disposés entre la couche hydrophile et le patin adhésif pour améliorer la tenue dudit patin n'est elle non plus pas satisfaisante. Cela entraine un surcoût pour l'opticien et des problèmes de manipulation pour l'opticien car le dépôt d'un sticker sans former de pli à sa surface est une opération délicate.

Le document WO 02/092524 décrit un procédé pour rendre apte au débordage un verre comportant un revêtement hydrophobe et/ou oléophobe fluoré, comprenant le dépôt à sa surface d'une couche protectrice temporaire, par exemple une couche de MgF₂ ou une couche d'oxydes métalliques tels qu'un mélange d'alumine et d'oxyde de praséodyme.

Les objectifs de l'invention sont atteints grâce à l'utilisation d'une couche temporaire dont la composition a été spécialement conçue pour résoudre le problème posé, que l'on interpose entre le revêtement précurseur du revêtement antibuée déposé en excès et l'organe de fixation, et qui doit être éliminée après l'opération de débordage.

Ainsi, la présente invention concerne un article d'optique comprenant un substrat dont au moins une des surfaces principales est revêtue d'un premier revêtement comportant à sa surface des groupes silanols et, en contact direct avec ce revêtement, un second revêtement, précurseur d'un revêtement antibuée, le second revêtement, précurseur du revêtement antibuée, étant formé par dépôt sur le premier revêtement comportant à sa surface des groupes silanols d'au moins un composé A possédant :
- un groupe polyoxyalkylène, et
- au moins un groupe capable d'établir une liaison covalente avec un groupe silanol,
où le second revêtement, précurseur du revêtement antibuée, comprend une partie interne dans laquelle ledit composé A est greffé au revêtement comportant à sa surface des groupes silanols, et une partie externe éliminable par lavage et/ou essuyage, résultant du dépôt du composé A, le second revêtement, précurseur du revêtement antibuée, étant revêtu d'au moins une couche temporaire comprenant au moins 50%, de préférence au moins 60%, mieux au moins 70 % en masse de silice, par rapport à la masse totale de la couche temporaire.

L'invention concerne également un procédé de fabrication ainsi qu'un procédé de débordage d'un tel article.

Dans la présente demande, un revêtement qui est "sur" un substrat/revêtement ou qui a été déposé "sur" un substrat/revêtement est défini comme un revêtement qui (i) est positionné au-dessus du substrat/revêtement, (ii) n'est pas nécessairement en contact avec le substrat/revêtement, c'est-à-dire qu'un ou plusieurs revêtements intermédiaires peuvent être disposés entre le substrat/revêtement et le revêtement en question (toutefois, il est de préférence en contact avec ledit substrat/revêtement), et (iii) ne recouvre pas nécessairement le substrat/revêtement complètement. Lorsque "une couche 1 est localisée sous une couche 2", on comprendra que la couche 2 est plus éloignée du substrat que la couche 1. De même une couche dite "externe " est plus éloignée du substrat qu'une couche dite "interne".

Par "revêtement antibuée", on entend dans la présente demande un revêtement qui, lorsqu'un substrat en verre transparent revêtu de ce revêtement est placé dans des conditions générant de la buée sur ledit substrat non équipé dudit revêtement, permet immédiatement une acuité visuelle > 6/10^{ème} pour un observateur observant à travers le verre revêtu une échelle d'acuité visuelle située à 5 mètres de distance. Un test permettant d'évaluer les propriétés antibuée d'un revêtement est décrit dans la partie expérimentale. Dans des conditions génératrices de buée, les revêtements antibuée peuvent soit ne pas présenter de buée à leur surface (pas de distorsion visuelle dans le cas idéal, ou bien distorsion visuelle mais acuité visuelle > 6/10^{ème} dans les conditions de mesure indiquées ci-dessus), soit présenter de la buée à leur surface mais tout de même permettre, malgré la perturbation de la vision causée par la buée, une acuité visuelle > 6/10^{ème} dans les conditions de mesure indiquées ci-dessus. Un revêtement non antibuée ne permet pas une acuité visuelle > 6/10^{ème} tant qu'il est exposé à des conditions générant de la buée et présente généralement un voile de condensation dans les conditions de mesure indiquées ci-dessus.

Par "verre antibuée", on entend dans la présente demande un verre équipé d'un "revêtement antibuée" tel que défini ci-dessus.

Ainsi, le précurseur du revêtement antibuée selon l'invention, qui est un revêtement hydrophile, n'est pas considéré comme étant un revêtement antibuée au sens de l'invention. Effectivement, ce précurseur de revêtement antibuée ne permet pas une acuité visuelle > 6/10^{ème} dans les conditions de mesure indiquées ci-dessus.

Par revêtement antibuée temporaire, on entend un revêtement antibuée obtenu après l'application d'une solution liquide contenant au moins un tensioactif à la surface d'un revêtement précurseur dudit revêtement antibuée. La durabilité d'un revêtement antibuée temporaire est généralement limitée par des essuyages de sa surface, les molécules de tensioactifs n'étant pas accrochées de façon permanente à la surface du revêtement mais simplement adsorbées plus ou moins durablement.

L'article d'optique préparé selon l'invention comprend un substrat, de préférence transparent, ayant des faces principales avant et arrière, l'une au moins desdites faces principales comprenant un revêtement comportant à sa surface des groupes silanols, de préférence les deux faces principales. Par face arrière (généralement concave) du substrat, on entend la face qui, lors de l'utilisation de l'article, est la plus proche de l'oeil du porteur. Inversement, par face avant (généralement convexe) du substrat, on entend la face qui, lors de l'utilisation de l'article, est la plus éloignée de l'oeil du porteur.

Bien que l'article selon l'invention puisse être un article d'optique quelconque susceptible d'être confronté à une formation de buée, tel qu'un écran, un vitrage pour l'industrie automobile ou du bâtiment, ou un miroir, il est de préférence une lentille optique, mieux une lentille ophtalmique, pour lunettes, ou une ébauche de lentille optique ou ophtalmique.

Ceci exclut des articles tels que des lentilles intraoculaires en contact avec des tissus vivants ou des lentilles de contact, qui ne sont intrinsèquement pas confrontées au problème de formation de buée, contrairement aux verres de lunettes.

Le revêtement comportant à sa surface des groupes silanols de l'invention peut être formé sur au moins l'une des faces principales d'un substrat nu, c'est-à-dire non revêtu, ou sur au moins l'une des faces principales d'un substrat déjà revêtu d'un ou plusieurs revêtements fonctionnels.

Le substrat de l'article d'optique selon l'invention peut être un verre minéral ou organique, par exemple un verre organique en matière plastique thermoplastique ou thermodurcissable.

Des classes de substrats particulièrement préférées sont les poly(thiouréthanes), les polyépisulfures et les résines résultant de la polymérisation ou (co)polymérisation de bis allyl carbonates d'alkylène glycols. Ces derniers sont vendus, par exemple, sous la dénomination commerciale CR-39^{®} par la société PPG Industries (lentilles ORMA^{®} ESSILOR).

Dans certaines applications, il est préférable que la surface principale du substrat soit revêtue d'un ou plusieurs revêtements fonctionnels préalablement au dépôt du revêtement comportant à sa surface des groupes silanols. Ces revêtements fonctionnels classiquement utilisés en optique peuvent être, sans limitation, une couche de primaire antichoc, un revêtement anti-abrasion et/ou anti-rayures, un revêtement polarisé, un revêtement photochrome ou un revêtement coloré, en particulier une couche de primaire antichoc revêtue d'une couche anti-abrasion et/ou anti-rayures.

Le revêtement comportant à sa surface des groupes silanols peut être déposé sur un revêtement anti-abrasion et/ou anti-rayures. Le revêtement anti-abrasion et/ou anti-rayures peut être toute couche classiquement utilisée comme revêtement anti-abrasion et/ou anti-rayures dans le domaine des lentilles ophtalmiques.

Les revêtements résistant à l'abrasion et/ou aux rayures sont de préférence des revêtement durs à base de poly(méth)acrylates ou de silanes comprenant généralement une ou plusieurs charges minérales destinées à augmenter la dureté et/ou l'indice de réfraction du revêtement une fois durci. Par (méth)acrylate, on entend un acrylate ou un méthacrylate.

Parmi les revêtements recommandés dans la présente invention, on peut citer les revêtements à base d'hydrolysats d'époxysilanes tels que ceux décrits dans les brevets EP 0614957, US 4,211,823 et US 5,015,523.

L'épaisseur du revêtement anti-abrasion et/ou anti-rayures varie généralement de 2 à 10 µm, préférentiellement de 3 à 5 µm.

Préalablement au dépôt du revêtement anti-abrasion et/ou anti-rayures, il est possible de déposer sur le substrat un revêtement de primaire améliorant la résistance au choc et/ou l'adhésion des couches ultérieures dans le produit final.

Ce revêtement peut être toute couche de primaire antichoc classiquement utilisée pour les articles en matériau polymère transparent, tels que des lentilles ophtalmiques.

Parmi les compositions de primaire préférées, on peut citer les compositions à base de polyuréthanes thermoplastiques, telles que celles décrites dans les brevets JP 63-141001 et JP 63-87223, les compositions de primaire poly(méth)acryliques, telles que celles décrites dans le brevet US 5,015,523, les compositions à base de polyuréthanes thermodurcissables, telles que celles décrites dans le brevet EP 0404111 et les compositions à base de latex poly(méth)acryliques ou de latex de type polyuréthane, telles que celles décrites dans les brevets US 5,316,791 et EP 0680492.

Les couches de primaire ont généralement des épaisseurs, après durcissement, de 0,2 à 2,5 µm, de préférence de 0,5 à 1,5 µm.

Le revêtement comprenant à sa surface des groupes silanols va maintenant être décrit. Par revêtement comprenant à sa surface des groupes silanols, on entend un revêtement qui possède naturellement à sa surface des groupes silanols, ou bien un revêtement dont les groupes silanols ont été créés après qu'il a été soumis à un traitement d'activation de surface. Ce revêtement est donc un revêtement à base de siloxanes ou de silice, par exemple, sans limitation, une couche de silice, un revêtement sol-gel, à base notamment d'organosilanes tels que des alcoxysilanes, ou un revêtement à base de colloïdes de silice. Il peut s'agir notamment d'un revêtement anti-abrasion et/ou anti-rayure, ou, selon le mode de réalisation préféré, d'un, revêtement antireflet monocouche ou d'un revêtement antireflet multicouche dont la couche externe possède à sa surface des groupes silanols. Par couche externe d'un empilement, on entend la couche la plus éloignée du substrat.

Le traitement d'activation de surface éventuellement employé pour créer des groupes silanols ou du moins augmenter leur proportion à la surface d'un revêtement est généralement conduit sous vide. Il peut s'agir d'un bombardement avec des espèces énergétiques et/ou réactives, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide. Il peut également s'agir d'un traitement de surface acide ou basique et/ou par solvants. Plusieurs de ces traitements peuvent être combinés.

Par espèces énergétiques (et/ou réactives), on entend notamment des espèces ioniques ayant une énergie allant de 1 à 300 eV, préférentiellement de 1 à 150 eV, mieux de 10 à 150 eV, et mieux encore de 40 à 150 eV. Les espèces énergétiques peuvent être des espèces chimiques telles que des ions, des radicaux, ou des espèces telles que des photons ou des électrons.

Le revêtement comportant à sa surface des groupes silanols est de préférence une couche de bas indice de réfraction à base de silice (comprenant de la silice), idéalement consiste en une couche de silice (SiO₂), généralement obtenue par dépôt en phase vapeur. Ladite couche à base de silice a de préférence une épaisseur inférieure ou égale à 500 nm, mieux de 2 à 110 nm, préférentiellement variant de 5 à 100 nm.

Le revêtement comportant à sa surface des groupes silanols comprend de préférence au moins 70 % en masse de SiO₂, mieux au moins 80 % en masse et mieux encore au moins 90 % en masse de SiO₂. Comme il a été dit, dans une réalisation optimale, il comprend 100 % en masse de silice.

Le revêtement comportant à sa surface des groupes silanols peut également être un revêtement sol-gel à base de silanes tels que des alcoxysilanes, par exemple le tétraéthoxysilane ou des organosilanes tels que le γ-glycidoxypropyltriméthoxysilane. Un tel revêtement est obtenu par dépôt par voie liquide, en utilisant une composition liquide contenant un hydrolysat de silanes et éventuellement des matériaux colloïdaux de haut (> 1,55, préférentiellement > 1,60, mieux > à 1,70) ou de bas (≥ 1,55) indice de réfraction. Un tel revêtement dont les couches comprennent une matrice hybride organique/inorganique à base de silanes dans laquelle sont dispersés des matériaux colloïdaux permettant d'ajuster l'indice de réfraction de chaque couche est décrit par exemple dans le brevet FR 2858420.

Selon un mode de réalisation de l'invention, le revêtement comportant à sa surface des groupes silanols est une couche à base de silice déposée sur un revêtement anti-abrasion, de préférence déposée directement sur ce revêtement anti-abrasion.

Selon un autre mode de réalisation de l'invention, qui constitue le mode de réalisation préféré, l'article d'optique selon l'invention comporte un revêtement antireflet. Lorsqu'un tel revêtement est présent, il constitue généralement le revêtement comportant à sa surface des groupes silanols au sens de l'invention. Ce revêtement antireflet peut être tout revêtement antireflet classiquement utilisé dans le domaine de l'optique, en particulier de l'optique ophtalmique, à condition qu'il comporte à sa surface des groupes silanols.

Un revêtement antireflet se définit comme un revêtement, déposé à la surface d'un article d'optique, qui améliore les propriétés anti-réfléchissantes de l'article d'optique final. Il permet de réduire la réflexion de la lumière à l'interface article/air sur une portion relativement large du spectre visible.

Comme cela est bien connu également, les revêtements antireflet comprennent classiquement un empilement monocouche ou multicouche de matériaux diélectriques. Ce sont de préférence des revêtements multicouches, comprenant des couches de haut indice de réfraction (HI) et des couches de bas indice de réfraction (BI).

Dans la présente demande, une couche du revêtement antireflet est dite couche de haut indice de réfraction lorsque son indice de réfraction est supérieur à 1,55, de préférence supérieur ou égal à 1,6, mieux supérieur ou égal à 1,8 et encore mieux supérieur ou égal à 2,0. Une couche d'un revêtement antireflet est dite couche de bas indice de réfraction lorsque son indice de réfraction est inférieur ou égal à 1,55, de préférence inférieur ou égal à 1,50, mieux inférieur ou égal à 1,45. Sauf indication contraire, les indices de réfraction auxquels il est fait référence dans la présente invention sont exprimés à 25 °C pour une longueur d'onde de 550 nm.

Les couches HI et BI sont respectivement des couches de haut indice de réfraction et de bas indice de réfraction classiques, bien connues dans la technique, dont la constitution, l'épaisseur et le mode de dépôt sont décrits notamment dans la demande WO 2010/109154.

Préférentiellement, l'épaisseur totale du revêtement antireflet est inférieure à 1 micromètre, mieux inférieure ou égale à 800 nm et mieux encore inférieure ou égale à 500 nm. L'épaisseur totale du revêtement antireflet est généralement supérieure à 100 nm, de préférence supérieure à 150 nm.

Avant la formation du précurseur du revêtement antibuée sur le revêtement comportant à sa surface des groupes silanols, il est courant de soumettre la surface de ce revêtement à un traitement d'activation physique ou chimique, destiné à augmenter l'adhésion du précurseur du revêtement antibuée. Ces traitements peuvent être choisis parmi ceux décrits précédemment pour l'activation du revêtement comprenant à sa surface des groupes silanols.

Selon l'invention, le revêtement comportant à sa surface des groupes silanols est directement en contact avec le revêtement précurseur du revêtement antibuée, qui va maintenant être décrit.

Par "précurseur d'un revêtement antibuée", on entend dans la présente demande un revêtement qui, par application à sa surface d'une solution liquide contenant un surfactant de façon à former un film, constitue une revêtement antibuée au sens de l'invention. L'ensemble constitué par le revêtement précurseur et le film de solution à base de surfactant constitue le revêtement antibuée proprement dit.

Le revêtement précurseur du revêtement antibuée est formé par dépôt en quantité suffisante sur le revêtement comportant à sa surface des groupes silanols d'au moins un composé A possédant un groupe polyoxyalkylène et au moins un groupe capable d'établir une liaison covalente avec un groupe silanol. Selon l'invention, le dépôt du composé A forme un revêtement précurseur d'un revêtement antibuée comprenant une partie interne dans laquelle ledit composé A est greffé au revêtement comportant à sa surface des groupes silanols, de façon permanente (et non par simple adsorption), et une partie externe éliminable par lavage et/ou essuyage.

Pour parvenir à une telle structure, il est nécessaire de déposer un excès de composé A à la surface du revêtement comportant des groupes silanols. Le réglage des paramètres de dépôt pour parvenir à une telle configuration est à la portée de l'homme du métier.

Par excès, on entend une quantité de composé A supérieure à la quantité qui serait nécessaire pour former une couche de composé A greffée à la surface du revêtement comportant des groupes silanols.

Ainsi, le revêtement précurseur du revêtement antibuée est un revêtement ayant de préférence une épaisseur supérieure ou égale à 3 nm, mieux ≥ 5 nm, encore mieux ≥ 8 nm, et idéalement ≥ 10 nm. Son épaisseur est préférentiellement inférieure à 100 nm, mieux ≤ 50 nm et encore mieux ≤ 20 nm. Elle va typiquement de 3 à 100 nm, de préférence de 5 à 50 nm.

La partie externe du revêtement précurseur du revêtement antibuée est éliminable par lavage et/ou essuyage, ce qui signifie qu'elle serait éliminée en la soumettant notamment à un lavage avec de l'eau savonneuse (renfermant un tensioactif) au moyen d'une éponge puis avec de l'eau désionisée, et/ou à un essuyage pendant typiquement 20 secondes ou moins, au moyen d'un tissu CEMOl™, Wypall™ ou Selvith™ sec ou éventuellement imprégné d'alcool, typiquement de l'alcool isopropylique. Cet essuyage peut éventuellement être suivi d'un nouveau rinçage à l'eau désionisée et d'un essuyage final avec un chiffon.

Le composé A est capable, grâce à son ou ses groupe(s) réactif(s), d'établir une liaison covalente avec les groupes silanols présents à la surface du revêtement sur lequel il est déposé. Ce groupe peut être, sans limitation, un groupe isocyanate, acrylate, méthacrylate, halogénoalkyle, acide carboxylique ou sulfonique, chlorure d'acyle, chlorosulfonyle, chloroformiate, ester, un atome de silicium porteur d'au moins un groupe hydrolysable, ou un groupe contenant une fonction époxyde tel que le groupe glycidyle, préférentiellement un atome de silicium porteur d'au moins un groupe hydrolysable.

Le composé A est de préférence un composé organosilane dont le ou les groupe(s) capables d'établir une liaison covalente avec un groupe silanol est (sont) un (des) atome(s) de silicium porteur d'au moins un groupe hydrolysable. Sa chaîne polyoxyalkylène est fonctionnalisée à une seule extrémité ou à ses deux extrémités, de préférence à une seule extrémité, par au moins un, de préférence un seul, groupe comportant au moins un atome de silicium porteur d'au moins un groupe hydrolysable. Ce composé organosilane comprend de préférence un atome de silicium porteur d'au moins deux groupes hydrolysables, de préférence trois groupes hydrolysables. De préférence, il ne comprend pas de groupe uréthane. Il s'agit préférentiellement d'un composé de formule :

R¹YₘSi(X)₃₋ₘ (I)

dans laquelle les groupes Y, identiques ou différents, sont des groupes organiques monovalents liés au silicium par un atome de carbone, les groupes X, identiques ou différents, sont des groupes hydrolysables ou des groupes hydroxyle, R¹ est un groupe comprenant une fonction polyoxyalkylène, m est un entier égal à 0, 1 ou 2. De préférence m = 0.

Les groupes X sont préférentiellement choisis parmi les groupes alcoxy -O-R³, en particulier alcoxy en C₁-C₄, acyloxy -O-C(O)R⁴ où R⁴ est un radical alkyle, préférentiellement en C₁-C₆, de préférence méthyle ou éthyle, halogènes tels que Cl et Br ou triméthylsiloxy (CH₃)₃SiO-, et les combinaisons de ces groupes. De préférence, les groupes X sont des groupes alcoxy, et en particulier méthoxy ou éthoxy, et mieux éthoxy.

Le groupe Y, présent lorsque m n'est pas nul, est de préférence un groupe hydrocarboné, saturé ou non, de préférence en C₁-C₁₀ et mieux en C₁-C₄, par exemple un groupe alkyle, tel que méthyle ou éthyle, un groupe vinyle, un groupe aryle, par exemple phényle, éventuellement substitué, notamment par un ou plusieurs groupes alkyle en C₁-C₄. De préférence Y représente le groupe méthyle.

Selon un mode de réalisation préféré, le composé de formule I comprend un groupe trialcoxysilyle tel qu'un groupe triéthoxysilyle ou triméthoxysilyle.

Le groupe polyoxyalkylène du composé organosilane (groupe R¹) comprend de préférence moins de 80 atomes de carbone, mieux moins de 60 atomes de carbone, et encore mieux moins de 50 atomes de carbone. Le groupe R¹ vérifie de préférence ces mêmes conditions.

Le groupe R¹ a généralement pour formule -L-R², où L est un groupe divalent lié à l'atome de silicium des composés de formule I ou II par un atome de carbone, et R² est un groupe comprenant un groupe polyoxyalkylène lié au groupe L par l'intermédiaire d'un atome d'oxygène, cet atome d'oxygène étant compris dans le groupe R². Des exemples non limitatifs de groupes L sont les groupes alkylène linéaires ou ramifiés, éventuellement substitués, cycloalkylène, arylène, carbonyle, amido, ou des combinaisons de ces groupes comme les groupes cycloalkylènealkylène, biscycloalkylène, biscycloalkylènealkylène, arylènealkylène, bisphénylène, bisphénylènealkylène, amido alkylène, dont un exemple est le groupe CONH(CH₂)₃, ou bien les groupes -OCH₂CH(OH)CH₂- et -NHC(O)-. les groupes L préférés sont les groupes alkylène, de préférence linéaire, ayant de préférence 10 atomes de carbone ou moins, mieux 5 atomes de carbone ou moins, par exemple les groupe éthylène et propylène.

Les groupes R² préférés comprennent un groupe polyoxyéthylène -(CH₂CH₂O)ₙ-, polyoxypropylène, ou des combinaisons de ces groupes.

Les organosilanes de formule I préférés sont des composés de formule II suivante :

Yₘ(X)₃₋ₘSi(CH₂)_{n'}-(L')_{m'}-(OR)ₙ-O-(L")_{m"}-R' (II)

où R' est un atome d'hydrogène, un groupe acyle ou un groupe alkyle, linéaire ou ramifié, éventuellement substitué par un ou plusieurs groupes fonctionnels, et pouvant comporter en outre une ou plusieurs doubles liaisons, R est un groupe alkylène linéaire ou ramifié, de préférence linéaire, par exemple un groupe éthylène ou propylène, L' et L" sont des groupes divalents, X, Y et m sont tels que définis ci-dessus, n' est un entier allant de 1 à 10, de préférence de 1 à 5, n est un entier allant de 2 à 50, de préférence de 5 à 30, mieux de 5 à 15, m'est égal à 0 ou 1, de préférence 0, m" est égal à 0 ou 1, de préférence 0.

Les groupes L' et L", lorsqu'ils sont présents, peuvent être choisis parmi les groupes divalents L précédemment décrits et représentent de préférence le groupe -OCH₂CH(OH)CH₂-ou le groupe -NHC(O)-. Dans ce cas, les groupes -OCH₂CH(OH)CH₂- ou -NHC(O)- sont connectés aux groupes adjacents (CH₂)_{n'} (dans le cas d'un groupe L') et R' (dans le cas d'un groupe L") par l'intermédiaire de leur atome d'oxygène (pour le groupe -OCH₂CH(OH)CH₂-) ou par l'intermédiaire de leur atome d'azote (pour le groupe -NHC(O)-).

Le groupe -O-(L")_{m"}-R' est de préférence un groupe alcoxy (m" = 0, R' = alkyl), idéalement un groupe méthoxy.

De préférence, les composés de formule (I) ou (II) comprennent un seul atome de silicium porteur d'au moins un groupe hydrolysable.

Selon un mode de réalisation, m = 0 et les groupes hydrolysables X désignent des groupes méthoxy ou éthoxy. n' est de préférence égal à 3. Selon un autre mode de réalisation, R' désigne un groupe alkyle possédant moins de 5 atomes de carbone, de préférence le groupe méthyle. R' peut aussi désigner un groupe acyle aliphatique ou aromatique, notamment le groupe acétyle.

Enfin, R' peut désigner un groupe trialcoxysilylalkylène ou trihalogénosilylalkylène tel que le groupe -(CH₂)_{n"}Si(R⁵)₃ où R⁵ est un groupe hydrolysable tel que les groupes X définis précédemment et n" est un entier tel que le groupe n' défini précédemment. Un exemple d'un tel groupe R' est le groupe -(CH₂)₃Si(OC₂H₅)₃. Dans ce mode de réalisation, le composé organosilane comporte deux atomes de silicium porteurs d'au moins un groupe hydrolysable.

Selon des modes de réalisation préférés, n est égal à 3, ou bien varie de 6 à 9, de 9 à 12, de 21 à 24, ou de 25 à 30, de préférence de 6 à 9.

Comme exemples de composés de formule II, on peut citer les 2-[méthoxy(polyéthylèneoxy)propyl]triméthoxysilane de formules CH₃O-(CH₂CH₂O)₆₋₉-(CH₂)₃Si(OCH₃)₃ (III) et CH₃O-(CH₂CH₂O)₉₋₁₂-(CH₂)₃Si(OCH₃)₃ (IV), commercialisés par Gelest, Inc. ou ABCR, le composé de formule CH₃O-(CH₂CH₂O)₃-(CH₂)₃Si(OCH₃)₃ (VIII), les composés de formule CH₃O-(CH₂CH₂O)ₙ-(CH₂)₃Si(OC₂H₅)₃ où n= 21-24, les 2-(méthoxy(polyéthylèneoxy)propyl] trichlorosilanes, le 2-[acétoxy(polyéthylèneoxy)propyl] triméthoxysilane de formule CH₃C(O)O-(CH₂CH₂O)₆₋₉-(CH₂)₃Si(OCH₃)₃, le 2-[acétoxy(polyéthylèneoxy)propyl] triéthoxysilane de formule CH₃C(O)O-(CH₂CH₂O)₆₋₉-(CH₂)₃Si(OC₂H₅)₃, le 2-[hydroxy(polyéthylèneoxy)propyl]triméthoxysilane de formule HO-(CH₂CH₂O)₆₋₉-(CH₂)₃Si(OCH₃)₃, le 2-[hydroxy(polyéthylèneoxy)propyl]triéthoxysilane de formule HO-(CH₂CH₂O)₆₋₉-(CH₂)₃Si(OC₂H₅)₃, les composés de formules HO-(CH₂CH₂O)₈₋₁₂-(CH₂)₃Si(OCH₃)₃ et HO-(CH₂CH₂O)₈₋₁₂-(CH₂)₃Si(OC₂H₅)₃, l'oxyde de polypropylène-bis[(3-méthyldiméthoxysilyl)propyl], et les composés à deux têtes siloxanes tels que l'oxyde de polyéthylène-bis[(3-triéthoxysilylpropoxy)-2-hydroxypropoxy] de formule (V), l'oxyde de polyéthylène-bis[(N,N'-triéthoxysilylpropyl)-aminocarbonyl] de formule (VI) avec n = 10-15 et l'oxyde de polyéthylène-bis(triéthoxysilylpropyl) de formule (VII) :

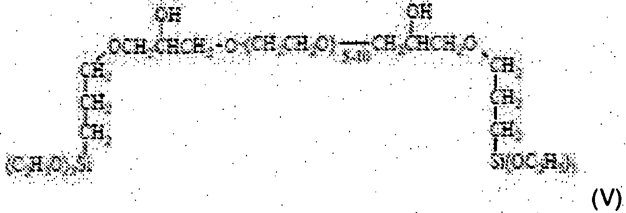

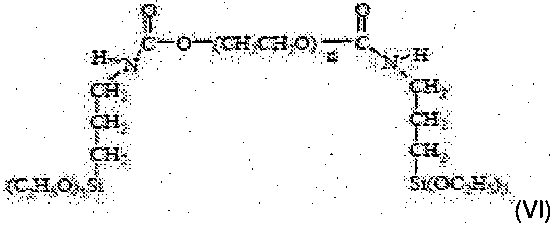

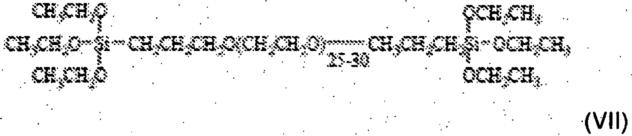

Les composés de formule II préférés sont les [alcoxy (polyalkylènoxy) alkyl]trialcoxysilanes ou leurs analogues trihalogénés (m = m' = m" = 0, R' = alcoxy).

De préférence, le composé organosilane de l'invention ne possède pas d'atome de fluor. Typiquement, le taux massique de fluor dans le revêtement précurseur du revêtement antibuée est inférieur à 5 %, de préférence inférieur à 1 % en poids et mieux de 0 %.

De préférence, la masse molaire du composé A selon l'invention va de 400 à 4000 g/mol, de préférence de 400 à 1500 g/mol, mieux de 400 à 1200 g/mol, et encore mieux de 400 à 1000 g/mol.

Selon un mode de réalisation de l'invention, le précurseur du revêtement antibuée comprend plus de 80 % en masse de composé organosilane selon l'invention, par rapport à la masse totale du précurseur du revêtement antibuée, de préférence plus de 90. Selon un mode de réalisation, le précurseur de revêtement antibuée consiste en une couche dudit composé organosilane.

De préférence, le précurseur de revêtement antibuée de l'invention contient moins de 5 % en masse d'oxyde métallique ou de métalloïde (par exemple de silice ou d'alumine) par rapport à la masse totale du revêtement, mieux n'en comprend pas. Lorsque le composé organosilane utilisé pour la formation du revêtement antibuée est déposé sous vide, de préférence aucun oxyde métallique n'est co-évaporé avec lui, selon la technique de la co-évaporation d'au moins un composé organique et d'au moins un composé inorganique décrite dans la demande EP 1324078.

Le précurseur de revêtement antibuée de l'invention possède de préférence un angle de contact statique avec l'eau strictement supérieur à 10° et strictement inférieur à 50°, de préférence inférieur ou égal à 45°, mieux ≤ 40°, encore mieux ≤ 30° et idéalement ≤ 25°. Cet angle de contact va de préférence de 15° à 40°, mieux de 20° à 30°. Son énergie de surface est de préférence d'au moins 15 mJ/m², mieux d'au moins 25 mJ/m². Ces différentes valeurs sont vérifiées par le précurseur de revêtement antibuée initialement déposé (incluant un excès de composé A), et/ou le précurseur de revêtement antibuée résultant de l'élimination de la couche temporaire de l'invention, de préférence par les deux.

Le dépôt du composé A à la surface du revêtement comportant des groupes silanols peut être réalisé selon des techniques habituelles, de préférence par dépôt en phase gazeuse ou en phase liquide, idéalement en phase gazeuse, par évaporation sous vide. Le composé A peut être au préalable dissous dans un solvant avant d'être évaporé, pour mieux contrôler la vitesse d'évaporation et de dépôt.

Selon l'un des modes de réalisation de l'invention, le revêtement précurseur est déposé par application d'une composition comprenant un hydrolysat du composé A, dans le cas où celui-ci est un organosilane. Dans ce cas, il est recommandé d'appliquer la composition assez rapidement après hydrolyse, typiquement moins de 2 heures, préférentiellement moins de 1 heure, mieux moins de 30 minutes après avoir procédé à l'hydrolyse (par ajout d'une solution aqueuse acide, typiquement de HCl), pour limiter la formation de prépolymères siloxanes avant greffage. Il est toutefois préféré de déposer ledit organosilane par voie gazeuse.

Après le dépôt du composé A conformément à l'invention, la partie externe du revêtement éliminable par essuyage n'est de préférence pas éliminée, que ce soit par lavage ou par essuyage, ou bien peut l'être, mais seulement partiellement. Ce revêtement précurseur présenterait donc des problèmes d'adhésion au patin de maintien lors du débordage.

Au moins une couche temporaire selon l'invention est formée directement sur le revêtement précurseur du revêtement antibuée. Plusieurs couches temporaires selon l'invention à base de matériaux identiques ou différents peuvent être formées les unes sur les autres.

Selon un mode de réalisation, le revêtement précurseur du revêtement antibuée est revêtu de deux couches temporaires adhérant l'une à l'autre, identiques ou différentes, chaque couche temporaire comprenant au moins 50 % en masse de silice, par rapport à la masse totale de cette couche temporaire.

Cependant, on préfère n'utiliser qu'une seule couche temporaire ou deux, idéalement une seule. La présente description est essentiellement rédigée dans cette optique par souci de concision, mais s'applique également au cas de l'utilisation d'une pluralité de couches temporaires.

Cette couche comprend au moins 50% en masse de silice, par rapport à la masse totale de la couche temporaire, préférentiellement au moins 60%, mieux au moins 70% en masse de silice. Elle comprend de préférence au moins 80 %, mieux au moins 90 % et encore mieux au moins 95 % en masse de silice. Selon un mode de réalisation de l'invention, la couche temporaire consiste en une couche de silice.

Lorsque la couche temporaire ne comprend pas uniquement de la silice, elle comprend d'autres matériaux qui sont préférentiellement des matériaux diélectriques tels que des oxydes métalliques, préférentiellement l'alumine (Al₂O₃).

Lorsqu'une couche temporaire comprenant un mélange de SiO₂ et d'Al₂O₃ est utilisée, elle comprend préférentiellement de 1 à 10 %, mieux de 1 à 8 % et encore mieux de 1 à 5 % en masse d'Al₂O₃ par rapport à la masse totale de SiO₂ + Al₂O₃ dans cette couche. Par exemple, Si02 dopée avec de 2 à 4 % d'Al₂O₃ en masse, ou SiO₂ dopée avec de 2,5 à 5% en masse, ou SiO₂ dopée avec de 4 à 8 % en masse d'Al₂O₃ peuvent être employés. Des mélanges SiO₂/Al₂O₃ disponibles dans le commerce peuvent être utilisés, tels que le LIMA^{®} 4 ou le LIMA® 8 commercialisés par Umicore Materials AG, ou la substance L5^{®} commercialisée par Merck KGaA.

Le matériau de la couche temporaire selon l'invention n'altère pas les propriétés de surface du revêtement précurseur du revêtement antibuée, et est susceptible d'être éliminé lors d'une opération ultérieure subséquente à l'étape dé débordage. Le matériau de cette couche temporaire possède aussi une force de cohésion suffisante de façon à ce que le retrait de la couche temporaire s'effectue sans laisser de résidus à la surface du revêtement précurseur du revêtement antibuée.

D'une manière générale, la couche temporaire doit avoir une épaisseur suffisante pour éviter toute altération ultérieure dés propriétés du revêtement précurseur du revêtement antibuée lors des différentes étapes de traitement de l'article. Son épaisseur est préférentiellement ≥ 5 nm, mieux ≥ 10 nm et de préférence ≤ 200 nm, mieux ≤ 100 nm et encore mieux ≤ 50 nm. Elle va typiquement de 5 à 200 nm, de préférence de 10 à 100 nm.

La couche temporaire présente de préférence un angle de contact statique avec l'eau inférieur à 50°, mieux inférieur à 40°, et encore mieux inférieur à 30°. Son énergie de surface est de préférence d'au moins 15 mJ/m², mieux d'au moins 25 mJ/m².

La couche temporaire peut être déposée par tout procédé classique convenable, en phase vapeur (dépôt sous vide), ou en phase liquide, par exemple par pulvérisation, centrifugation, ou trempage.

La couche temporaire est de préférence déposée par voie gazeuse, notamment par évaporation sous vide. En effet, le dépôt par traitement sous vide permet un contrôle précis de l'épaisseur de la couche temporaire et minimise les dispersions, ce qui n'est pas forcément le cas des autres solutions techniques disponibles. En outre, ce traitement sous vide présente l'avantage de pouvoir être directement intégré au procédé industriel de traitement des articles d'optique, en particulier lorsque ceux-ci sont équipés d'un revêtement antireflet.

De préférence, le dépôt de la couche temporaire est effectué dans une enceinte sous vide sans apport de gaz additionnel pendant l'étape de dépôt. Cette technique de dépôt, qu'il est préférable d'éviter, nommée dépôt sous régulation de pression de gaz, consiste à introduire un gaz supplémentaire dit "passif" tel que, sans limitation, l'argon, l'oxygène ou leurs mélanges, dans l'enceinte de dépôt sous vide pendant le dépôt d'une couche. Ce dépôt sous régulation de pression est différent d'un dépôt sous assistance ionique.

La couche temporaire est formée de façon à ce qu'elle recouvre au moins partiellement le revêtement précurseur du revêtement antibuée.

Le dépôt peut être effectué sur la totalité de la surface de la face de l'article d'optique destinée à recevoir le système patin adhésif de maintien/gland ou sur une partie de celle-ci. En particulier, la couche temporaire pourra être appliquée uniquement sur la zone destinée à recevoir le contact du patin de maintien, par exemple la partie centrale de l'article.

La couche temporaire peut couvrir uniformément la surface ciblée, c'est à dire présenter une structure continue, mais elle peut aussi présenter une structure discontinue, par exemple prendre la forme d'une trame. Ce type de structure peut être obtenu par application d'un masque à la surface de l'article, afin de limiter le dépôt de la couche temporaire à la zone souhaitée.

La zone couverte par la couche temporaire est telle que la surface de contact entre cette couche et le patin de maintien est suffisante pour assurer l'adhésion de la lentille au patin. Généralement, la couche temporaire recouvre au moins 15 %, de préférence au moins 20 %, mieux au moins 30 %, mieux encore au moins 40%, et de préférence la totalité de la surface de la face de l'article d'optique sur laquelle vient adhérer le patin, c'est-à-dire, lorsqu'il s'agit d'une lentille, sa face convexe.

A la suite du dépôt de la couche temporaire selon l'invention, on obtient un article d'optique apte au débordage. Cette couche temporaire constitue de préférence la couche externe de l'article d'optique, c'est-à-dire sa couche qui est en contact avec l'air. Il est cependant possible de déposer sur celle-ci d'autres films ou couches temporaires permettant de déborder l'article d'optique, notamment un film de nature polymère formé par exemple à partir d'un latex, conférant à l'article une énergie de surface de préférence supérieure ou égale à 15 mJ/m².

La couche temporaire utilisée dans la présente invention présente de nombreux avantages. Elle n'affecte pas la transparence de l'article d'optique, de sorte qu'il reste possible d'effectuer sur l'article revêtu de cette couche temporaire des mesures classiques de puissance par un frontofocomètre. Elle peut subir un marquage au moyen d'encres de marquage diverses, communément utilisées par l'homme de l'art pour les verres progressifs. Elle possède aussi une résistance mécanique généralement suffisante pour supporter les frottements générés durant le stockage et la manipulation des articles, notamment lorsque les articles sont des lentilles ophtalmiques stockées et distribuées dans des pochettes en papier.

Il est possible de déposer sur la surface de la couche temporaire un film adhérant par voie électrostatique tel que décrit dans la demande de brevet EP1664906.

L'invention concerne également un procédé de débordage d'un article d'optique tel que défini ci-dessus, comprenant :
- la fixation de l'article d'optique à un dispositif de maintien au moyen d'un patin adhésif adhérant à la surface de l'article d'optique (glantage) ;
- le montage du dispositif de maintien auquel adhère l'article d'optique par l'intermédiaire du patin adhésif dans un dispositif de débordage ;
- le débordage de l'article d'optique par usinage de la périphérie de l'article d'optique ; et
- après récupération de l'article d'optique (déglantage), l'élimination de la couche temporaire.

Dans le cas où l'article d'optique est un verre de lunettes, l'étape de débordage permet de le conformer aux dimensions et à la forme d'une monture.

La couche temporaire, ou surcouche, permet d'appliquer directement le patin de maintien sur l'article d'optique, et de le maintenir fermement au cours de l'opération de débordage, d'une part en raison de sa bonne adhésion au revêtement précurseur du revêtement antibuée, et d'autre part en améliorant l'adhérence normale et tangentielle du patin à la surface de l'article. De ce fait, elle évite les phénomènes de glissement et de désaxage, ainsi que le phénomène de déglantage, et permet de procéder à un débordage fiable.

En outre, elle permet un très bon maintien de l'article après le débordage. Après l'opération de débordage principale de l'article d'optique, on peut en effet souhaiter effectuer une opération de reprise de débordage, et/ou un perçage, la zone percée servant par exemple de point de fixation à une branche de monture de lunettes dans le cas d'un verre de lunettes. Pour ces dernières étapes, décrites notamment dans la demande WO 2009/071818, et en particulier pour le perçage du verre, il est fondamental que l'ensemble gland/patin adhésif de maintien reste en position sur la surface de l'article, car il constitue un repère permettant de positionner les forets pour le perçage des trous.

Les étapes de glantage, déglantage et les systèmes de maintien utilisables au cours de ce procédé, classiques pour l'homme du métier, sont décrits plus en détail dans les demandes EP 1392613 et WO 2010/055261.

Le procédé de débordage selon l'invention fournit des articles d'optique ayant subi un désaxage maximum de 2°, et, de façon optimale, inférieur ou égal à 1°.

L'étape de débordage peut éventuellement être suivie d'une étape de reprise de débordage et/ou d'une étape de perçage, avant que la couche temporaire ne soit éliminée.

La couche temporaire selon l'invention présente l'intérêt de pouvoir être éliminée très facilement après le débordage.

L'étape d'élimination de cette couche peut être effectuée soit en milieu liquide, soit par essuyage, notamment à sec, soit encore par une mise en oeuvre combinée de ces deux moyens. Cette étape peut être choisie parmi les étapes de lavage et d'essuyage citées plus haut. D'autres méthodes d'élimination en milieu liquide sont décrites notamment dans la demande WO 03/057641. Un essuyage au moyen d'un tissu ou chiffon est la technique d'élimination préférée.

Après élimination de la couche temporaire, qui entraîne également l'élimination du surplus du composé A déposé, c'est-à-dire de la partie externe du revêtement précurseur du revêtement antibuée éliminable par essuyage; il ne subsiste à la surface du revêtement comportant à sa surface des groupes silanols que la partie interne du revêtement précurseur du revêtement antibuée contenant le composé A effectivement greffé. Les molécules non greffées sont ainsi évacuées.

L'épaisseur du revêtement précurseur du revêtement antibuée restant après cette étape d'élimination est de préférence inférieure ou égale à 5 nm, mieux inférieure ou égale à 3 nm. Le composé A déposé à la surface de l'article d'optique forme donc de préférence une couche monomoléculaire ou quasi-monomoléculaire.

Ce procédé peut en outre comprendre une étape supplémentaire de dépôt d'un film d'une solution liquide contenant au moins un tensioactif à la surface du revêtement précurseur du revêtement antibuée obtenu après l'élimination de la couche temporaire et de la partie externe du revêtement précurseur du revêtement antibuée éliminable par essuyage, donnant ainsi accès à un revêtement antibuée temporaire.

On récupère ainsi un article d'optique possédant d'excellentes propriétés antibuée, ce qui signifie que la couche temporaire selon l'invention n'exerce aucune influence négative sur les propriétés antibuée de l'article. Elle n'affecte pas non plus la durabilité des propriétés du revêtement antibuée.

Cette solution fournit aux verres une protection temporaire contre la buée en créant une couche uniforme à leur surface qui aide à disperser les gouttelettes d'eau sur la surface du verre de sorte qu'elles ne forment pas de buée visible.

L'application de la solution de tensioactif peut être réalisée par toute technique connue, notamment par trempage, centrifugation ou pulvérisation.

La solution de tensioactif est préférentiellement appliquée par dépôt d'une goutte de cette solution à la surface du précurseur du revêtement antibuée puis en l'étalant de façon à couvrir de préférence la totalité dudit revêtement précurseur.

La solution de tensioactif appliquée est généralement une solution aqueuse, contenant de préférence de 0,5 à 10%, mieux de 2 à 8% en masse de tensioactif.

Une grande variété de tensioactifs peut être employée. Ceux-ci peuvent être ioniques (cationiques, anioniques ou amphotères) ou non ioniques, de préférence non ioniques ou anioniques. Cependant, un mélange de tensioactifs appartenant à ces différentes catégories est envisageable. De préférence, on utilise un agent tensioactif comportant des groupes poly(oxyalkylène).

On utilise avantageusement une solution d'entretien commerciale contenant un tensioactif, disponible sous forme de spray ou de lingettes. Une solution de surfactant disponible dans le commerce pour conférer une propriété antibuée est la solution Clarity Defog it^{®} de la société Nanofilm.

Le revêtement antibuée de l'invention présente de préférence un angle de contact statique avec l'eau inférieur ou égal à 10°, mieux inférieur ou égal à 5°.

L'invention concerne également un procédé de préparation d'un article d'optique, de préférence une lentille ophtalmique, tel que défini ci-dessus, comprenant :
a) fournir un substrat dont au moins une des surfaces principales est revêtue d'un revêtement comportant à sa surface des groupes silanols,
b) déposer sur ledit revêtement, de préférence par évaporation sous vide, au moins un composé A possédant un groupe polyoxyalkylène et au moins un groupe capable d'établir une liaison covalente avec un groupe silanol, de façon à obtenir un revêtement précurseur d'un revêtement antibuée comprenant une partie interne dans laquelle ledit composé A est greffé au revêtement comportant à sa surface des groupes silanols, et une partie externe éliminable par lavage et/ou essuyage,
c) déposer sur le revêtement précurseur du revêtement antibuée, de préférence par évaporation sous vide, au moins une couche temporaire comprenant au moins 50 % en masse de silice, par rapport à la masse totale de la couche temporaire.

Les exemples suivants illustrent l'invention de façon plus détaillée mais non limitative. Sauf indication contraire, toutes les épaisseurs figurant dans la présente demande sont des épaisseurs physiques mesurées.

### EXEMPLES

### 1. Matériaux et articles d'octique utilisés

La silice est utilisée sous forme de granulés fournis par la société Optron Inc. Les mélanges de silice et d'alumine on été fournis par les sociétés Umicore et Merck KGaA. Le composé organosilane utilisé dans les exemples pour former le précurseur du revêtement antibuée est le 2-[méthoxy(polyéthylèneoxy)propyl]triméthoxysilane possédant 6 à 9 unités oxyde d'éthylène (exemples 1-4, 6, 7), de formule (III) et de masse molaire 450-600 g/mol (CAS No. : 65994-07-2, Ref : SIM6492.7, fourni par la société Gelest, Inc.).

Le dispositif d'évaporation sous vide permettant de déposer les différentes couches (antireflet, revêtement précurseur du revêtement anti-buée, couche temporaire) est une machine SATIS 1200 DLF (pression de démarrage, à laquelle le procédé va démarrer : 3,5.10⁻³ Pa).

Les verres utilisés dans les exemples selon l'invention comprennent un substrat de lentille en polycarbonate de bisphénol A (correction -8.00 dioptries, +2.00 cylindre), comportant sur chacune de ses faces un primaire antichoc de polyuréthane d'une épaisseur de l'ordre de 1 micron, lui-même revêtu d'un revêtement anti-abrasion d'une épaisseur de l'ordre de 3 microns en déposant et durcissant une composition telle que définie dans l'exemple 3 du brevet EP 614957, revêtu à son tour d'un revêtement antireflet à cinq couches ZrO₂/SiO₂/ZrO₂/ITO/SiO₂ déposé sur le revêtement anti-abrasion par évaporation sous vide des matériaux dans l'ordre où ils ont été cités (épaisseurs respectives des couches : 29, 23, 68, 6,5 et 85 nm, vitesses de dépôt respectives : 0,32, 0,7, 0,32, 0,13, 1,05 nm/s). Les couches de ZrO₂ sont déposées avec introduction d'O₂ passif (6.10⁻³ Pa) sans assistance ionique. La couche d'ITO est déposée sous assistance ionique d'ions oxygène (2 A, 120 V) sans apport d'O₂ passif. Une couche d'ITO est une couche électriquement conductrice d'oxyde d'indium dopé à l'étain (In₂O₃:Sn).

Avant le dépôt du revêtement antireflet, les verres comportant le revêtement anti-abrasion sont soumis à un traitement d'activation de surface (IPC) qui consiste à effectuer un bombardement ionique avec des ions argon, sous vide, à une pression typiquement de 3,5.10⁻⁵ mbar (1 minute, 3 A, 150 V).

Dans les exemples, le revêtement antireflet n'est soumis à aucun traitement d'activation avant le dépôt du précurseur du revêtement antibuée.

### 2. Dépôt du précurseur du revêtement antibuée en phase vapeur

Le dépôt est réalisé sur le revêtement antireflet des lentilles par évaporation sous vide en utilisant une source thermique à effet Joule. 150 µL de composé siloxane de formule (III) sont versés dans une capsule de cuivre, et cette capsule est déposée sur un support chauffant en tantale conducteur. La pression d'évaporation du composé siloxane de formule (III) varie généralement de 5.10⁻⁴ à 8.10⁻⁴ Pa (vitesse de dépôt : 0,3 nm/s). On obtient une couche de 9 à 15 nm d'épaisseur selon les essais (incluant le surplus de composé, siloxane), possédant un angle de contact statique avec l'eau de 13°.

### 3. Dépôt des couches temporaires

Des couches temporaires conformes à l'invention ou comparatives, de 7, 12, 24 ou 48 nm d'épaisseur ont été formées sur les revêtements précurseurs des revêtements antibuée décrits ci-dessus par évaporation sous vide dans une enceinte à vide (vitesse de dépôt : 0,7 rim/s) P=3.10⁻³ Pa, sans apport de gaz passif ni assistance ionique. On obtient des lentilles ophtalmiques présentant un aspect généralement bleuté (qui disparaîtra après essuyage et/ou lavage). D'autres couleurs sont possibles selon l'épaisseur et l'indice de réfraction de la couche temporaire. Les couches temporaires conformes à l'invention possèdent des angles de contact statiques avec l'eau allant de 22 à 23°.

Les performances des articles ainsi préparés ont été évaluées en les soumettant aux quatre tests décrits dans le paragraphe suivant, une semaine après leur préparation.

### 4. Evaluation des performances des articles préparés

### a) Test de déglantage

Le test de déglantage consiste à coller un ensemble gland + patin de maintien sur la face convexe d'un verre puis à soumettre le tout à un arrosage d'eau du robinet (eau à 25°C) pendant 45 secondes, de façon à reproduire l'exposition à l'eau couramment utilisée au cours du débordage. On observe la tenue de l'ensemble gland + patin de maintien sur le verre tout au long du test. Le système de notation est le suivant :
0 = mauvaise tenue du patin de maintien
1 = bonne tenue du patin de maintien, mais patin de maintien facile à enlever
2 = bonne tenue du patin de maintien, patin de maintien difficile à enlever

### b) Test d'élimination de la couche temporaire par essuyage

La couche temporaire est essuyée manuellement à l'aide d'un chiffon de type Selvith^{™} dans le but de l'éliminer et d'obtenir des verres comportant en tant que couche externe un revêtement précurseur de revêtement antibuée. Le système de notation est le suivant :
0 = couche temporaire impossible à éliminer avec chiffon sec ou humide
1 = couche temporaire difficile à éliminer avec chiffon sec ou humide
2 = couche temporaire facile à éliminer avec chiffon sec

### c) Test de performance antibuée

Les verres soumis à ce test ont au préalable subi le test d'élimination de la couche temporaire décrit dans le § b). On a ensuite appliqué sur à la surface de ces verres une seule fois la solution Clarity^{®} Defog It, contenant des tensioactifs (polyéthylène gycols, en solution dans l'isopropanol), commercialisée par la société Nanofilm.

Les verres ont ensuite été placés 24 heures dans un environnement régulé en température (20-25°C) et à une humidité de 50 %.

Les verres sont alors placés 15 secondes au dessus d'un récipient chauffé contenant de l'eau à 55°C. Immédiatement après, une échelle d'acuité visuelle située à 5 m est observée à travers le verre testé. L'observateur évalue l'acuité visuelle (en transmission) suivant les critères suivants :
2 = Pas de buée, pas de distorsion visuelle (acuité visuelle = 10/10^{ème})
1 = Buée et/ou distorsion visuelle permettant une acuité visuelle > 6/10^{ème}
0 = Buée et/ou distorsion visuelle permettant une acuité visuelle < 6/10^{ème}

Concrètement, pour obtenir la note 0 ou 1, un porteur ayant une vision de 10/10 et ayant le verre placé devant son oeil doit être capable de distinguer l'orientation des lettres "E" sur la ligne 6/10 du tableau Optotype de Snellen placé à 5 mètres (ECHELLE ARMAIGNAC Tridents, réf. T6 disponible chez FAX INTERNATIONAL).

Ce test permet de simuler les conditions de vie courante où un porteur place son visage au dessus de son thé, café ou d'une casserole d'eau bouillante.

### d) Test de débordage

Le test de débordage, effectué sur une meuleuse Essilor Kappa, ainsi que le protocole de mesure du désaxage subi par les lentilles au cours de cette opération, sont décrits en détail dans la demande WO 2009/071818. Au cours de ce test, le patin de maintien adhésif employé (LEAP II de diamètre 24 mm GAM200 de la société 3M) est directement en contact avec la couche temporaire. Une lentille est considérée comme passant le test de débordage si elle présente un désaxage de 2° ou moins.

### 5. Résultats

### a) Etude de l'influence de la nature des matériaux constituant la couche temporaire.

Le tableau 1 montre que les couches temporaires conformes à l'invention, c'est-à-dire à base de silice ou d'un mélange de silice et d'alumine dans la limite de 8% en masse, conduisent à des résultats satisfaisants. Les lentilles des exemples 1-4 ont une couche temporaire permettant de réaliser le débordage dans de bonnes conditions, qu'il est possible d'éliminer sans difficulté et qui fournit, après élimination de cette couche, une lentille possédant les performances antibuée attendues.

Les résultats sont satisfaisants, que la couche temporaire de silice soit évaporée ou non avec apport d'oxygène passif pendant l'évaporation.

Il a en outre été constaté que des matériaux tels que l'alumine ou l'oxyde d'étain, lorsqu'ils sont utilisés purs, comme couche temporaire, nuisent aux performances antibuée du verre, ce qui pourrait s'expliquer par une contamination ou un arrachement du précurseur de revêtement antibuée lors de l'élimination de la couche temporaire. L'alumine constitue par ailleurs une couche temporaire difficile à éliminer. Il est à noter que les mauvais résultats obtenus pour certains verres lors du test des performances antibuée peuvent s'expliquer par le fait que la couche temporaire n'a pas été complètement éliminée.

D'autres couches ne convenant pas pour une utilisation en tant que couche temporaire selon l'invention sont des couches constituées de chrome, ITO, et TiO₂.

L'épaisseur de la couche temporaire est un paramètre ayant une influence limitée. Dans quelques cas, on constate que l'augmentation de l'épaisseur de la couche temporaire diminue légèrement la note antibuée, élimination ou déglantage. La nature du matériau constituant la couche temporaire reste le paramètre le plus important.

**Tableau 1 (épaisseur du revêtement précurseur du revêtement antibuée : 12 nm)**

| Exemple | Couche temporaire | Epaisseur couche temporaire (nm) | Note déglantage | Note élimination | Note antibuée |
|---|---|---|---|---|---|
| 1 | SiO₂ | 12 | 2 | 2 | 2 |
| | | 24 | | | |
| | | 48 | | | |
| 2 | SiO₂ (*) | 12 | 1 | 2 | 2 |
| | | 24 | | | |
| | | 48 | | 1 | 1 |
| C1 | ZrO₂ (*) | 12 | 0 | 2 | 1 |
| | | 24 | | | |
| | | 48 | | | |
| 3 | SiO₂/Al₂O₃ (**) | 24 | 2 | 2 | 2 |
| 4 | SiO₂/Al₂O₃ (***) | 12 | 2 | 2 | 2 |
| | | 24 | | | |
| | | 48 | 1 | | |
| C2 | SnO₂ | 12 | 2 | 2 | 0 |
| | | 24 | | | |
| | | 48 | | | |
| C3 | Al₂O₃ | 12 | 2 | 1 | 0 |
| | | 24 | | 0 | |
| | | 48 | | | 1 |

| | | | | | |
|---|---|---|---|---|---|
| (*) : Apport d'oxygène pendant le dépôt de la couche temporaire, générant une couche poreuse. (**) : Lima^{®} 8 de la société Umicore, contenant de 4 à 8 % en masse d'alumine. (***) : L5^{®} de la société Merck KGaA, contenant de 2,5 à 5 % en masse d'alumine. | | | | | |

Il a été vérifié que les performances en termes de déglantage, d'élimination et les performances antibuée des lentilles des exemples 1 à 4 étaient conservées au moins un mois après leur préparation. Afin de travailler dans des conditions optimales, il est recommandé de déborder les lentilles équipées d'une couche temporaire selon l'invention dans un délai d'un mois. Au-delà d'un temps trop long, la couche temporaire selon l'invention devient légèrement plus difficile à enlever, sans que cela ne se traduise cependant par des performances inférieures lors des tests de déglantage et d'évaluation des performances antibuée.

Il a également été constaté que la vitesse d'évaporation du matériau précurseur de la couche temporaire avait peu d'influence sur les performances des lentilles préparées.

Il est à noter qu'après l'élimination de la couche temporaire, le revêtement précurseur du revêtement antibuée possède un angle de contact statique avec l'eau de l'ordre de 35-37° (exemples 1-4).

En ce qui concerne le test de débordage (réalisé sur des lentilles ayant un précurseur de revêtement antibuée de 12 nm d'épaisseur et une couche temporaire de SiO₂/Al₂O₃ L5^{®} de 7 nm d'épaisseur), les lentilles selon l'invention ne subissent aucun désaxage. Les glands se décollent difficilement de l'adhésif qui lui, reste collé sur la surface convexe du verre. Compte tenu de la bonne tenue du patin à l'issue du débordage, ces lentilles sont aptes à subir une opération de reprise de débordage où de perçage. Il a été vérifié que des lentilles ne comportant aucune couche temporaire échouaient au test de débordage.

### b) Etude de l'influence de l'épaisseur du revêtement précurseur du revêtement antibuée

Le tableau 2 montre que modifier l'épaisseur du précurseur du revêtement antibuée peut permettre de moduler les performances de l'article d'optique. Ainsi, une augmentation de l'épaisseur du revêtement précurseur du revêtement antibuée améliore la facilité d'élimination de la couche temporaire et améliore les performances antibuée, mais diminue l'aptitude au débordage.

Cependant, la nature du matériau constituant la couche temporaire reste le paramètre le plus important.

Il est donc possible d'optimiser l'épaisseur de la couche temporaire comprenant, conformément à l'invention, au moins 50 % en masse de silice, et l'épaisseur de précurseur de revêtement antibuée déposé en excès, de façon à parvenir simultanément à un produit que l'on peut déborder en toute sécurité, possédant de bonnes performances antibuée, et dont la couche temporaire facilitant le débordage est facile à éliminer.

**Tableau 2**

| Exemple | Couche temporaire (épaisseur : 24 nm) | Epaisseur précurseur antibuée (nm) | Note déglantage | Note élimination | Note antibuée |
|---|---|---|---|---|---|
| 5 | SiO₂ | 9 | 2 | 1 | 1 |
| | | 12 | | 2 | 2 |
| | | 15 | 1 | | |
| 6 | SiO₂/Al₂O₃ (***) | 9 | 2 | 1 | 2 |
| | | 12 | | 2 | |
| | | 15 | | | |

| | | | | | |
|---|---|---|---|---|---|
| (***) : Substance L5^{®} de la société Merck KGaA, contenant de 2,5% à 5 % en masse d'alumine. b) Etude de l'influence de la superposition de deux couches temporaires selon l'invention | | | | | |

Le tableau 3 montre qu'il est possible d'empiler deux couches temporaires conformes à l'invention, dont les épaisseurs n'ont pas été optimisées, pour produire une bicouche temporaire conduisant à des résultats satisfaisants lors des trois tests effectués.

**Tableau 3 (épaisseur du revêtement précurseur du revêtement antibuée : 12 nm)**

| Exemple | Couche temporaire (interne // externe) | Epaisseur couche temporaire (nm) | Note déplantage | Note élimination | Note antibuée |
|---|---|---|---|---|---|
| 7 | SiO₂ // SiO₂/Al₂O₃ -/- (***) | 12 // 12 | 1 | 2 | 2 |
| 8 | SiO₂/Al₂O₃ -/- (***) // SiO₂ | 12 // 12 | 2 | 2 | 2 |

| | | | | | |
|---|---|---|---|---|---|
| (***) : Substance L5^{®} de la société Merck KGaA, contenant de 2,5 à 5 % en masse d'alumine. | | | | | |

## Revendications

1. Article d'optique comprenant un substrat dont au moins une des surfaces principales est revêtue d'un premier revêtement comportant à sa surface des groupes silanols et, en contact direct avec ce revêtement, un second revêtement, précurseur d'un revêtement antibuée, le second revêtement étant formé par dépôt sur le premier revêtement d'au moins un composé A possédant :
- un groupe polyoxyalkylène, et
- au moins un groupe capable d'établir une liaison covalente avec un groupe silanol,
**caractérisé en ce que** le second revêtement comprend une partie interne dans laquelle ledit composé A est greffé au premier revêtement, et une partie externe éliminable par lavage et/ou essuyage, résultant du dépôt du composé A,
et **en ce que** le second revêtement est revêtu d'au moins une couche temporaire comprenant au moins 50%, de préférence, au moins 60%, mieux au moins 70% en masse de silice, par rapport à la masse totale de la couche temporaire.

2. Article d'optique selon la revendication 1, **caractérisé en ce que** la couche temporaire est la couche externe de l'article d'optique, en contact avec l'air.

3. Article d'optique selon la revendication 1 ou 2, **caractérisé en ce que** le revêtement précurseur du revêtement antibuée a une épaisseur allant de 3 à 100 nm, de préférence de 5 à 50 nm.

4. Article d'optique selon l'une quelconque des revendications précédentes, **caractérisé en ce que** le composé A est un organosilane, dont le groupe capable d'établir une liaison covalente avec un groupe silanol est un atome de silicium porteur d'au moins un groupe hydrolysable.

5. Article d'optique selon la revendication 4, **caractérisé en ce que** le composé organosilane est un composé de formule :
R¹YₘSi(X)₃₋ₘ (I)
dans laquelle les groupes Y, identiques ou différents, sont des groupes organiques monovalents liés au silicium par un atome de carbone, les groupes X, identiques ou différents, sont des groupes hydrolysables ou des groupes hydroxyde, R¹ est un groupe comprenant une fonction polyoxyalkylène, m est un entier égal à 0, 1 ou 2.

6. Article d'optique selon l'une quelconque des revendications précédentes, **caractérisé en ce que** la couche temporaire comprend de 1 à 10 % en masse d'alumine, de préférence de 1 à 8 %, par rapport à la masse totale de la couche temporaire.

7. Article d'optique selon l'une quelconque des revendications 1 à 5, **caractérisé en ce que** la couche temporaire consiste en une couche de silice.

8. Article d'optique selon l'une quelconque des revendications précédentes, **caractérisé en ce que** la couche temporaire a une épaisseur allant de 5 à 200 nm, de préférence de 10 à 100 nm.

9. Article d'optique selon l'une quelconque des revendications précédentes, **caractérisé en ce que** le revêtement précurseur du revêtement antibuée a une énergie de surface supérieure ou égale à 15 mJ/m².

10. Article d'optique selon l'une quelconque des revendications précédentes, **caractérisé en ce que** le revêtement comportant à sa surface des groupes silanols est un revêtement antireflet ou une couche à base de silice déposée sur un revêtement anti-abrasion.

11. Article d'optique selon l'une quelconque des revendications précédentes, **caractérisé en ce qu'**il constitue une lentille optique, de préférence une lentille ophtalmique.

12. Article d'optique selon l'une quelconque des revendications précédentes, **caractérisé en ce que** le second revêtement est revêtu d'une seule couche temporaire comprenant au moins 50 % en masse de silice, par rapport à la masse totale de la couche temporaire.

13. Article d'optique selon l'une quelconque des revendications précédentes, **caractérisé en ce que** le second revêtement est revêtu de deux couches temporaires adhérant l'une à l'autre, identiques ou différentes, chaque couche temporaire comprenant au moins 50 % en masse de silice, par rapport à la masse totale de cette couche temporaire.

14. Procédé de débordage d'un article d'optique tel que défini dans l'une quelconque des revendications précédentes, **caractérisé en ce qu'**il comprend :
- la fixation de l'article d'optique à un dispositif de maintien au moyen d'un patin adhésif adhérant à la surface de l'article d'optique ;
- le montage du dispositif de maintien auquel adhère l'article d'optique par l'intermédiaire du patin adhésif dans un dispositif de débordage ;
- le débordage de l'article d'optique par usinage de la périphérie de l'article d'optique ; et
- après récupération de l'article d'optique, l'élimination de la couche temporaire.

15. Procédé selon la revendication 14, **caractérisé en ce que** l'épaisseur du revêtement précurseur du revêtement antibuée après l'élimination de la couche temporaire est inférieure ou égale à 5 nm, de préférence inférieure ou égale à 3 nm.

16. Procédé de préparation d'un article d'optique selon l'une quelconque des revendications 1 à 13, comprenant :
a) fournir un substrat dont au moins une des surfaces principales est revêtue d'un premier revêtement comportant à sa surface des groupes silanols,
b) déposer sur ledit premier revêtement, de préférence par évaporation sous vide, au moins un composé A possédant un groupe polyoxyalkylène et au moins un groupe capable d'établir une liaison covalente avec un groupe silanol, de façon à obtenir un second revêtement, précurseur d'un revêtement antibuée, comprenant une partie interne dans laquelle ledit composé A est greffé au premier revêtement, et une partie externe éliminable par lavage et/ou essuyage,
c) déposer sur le second revêtement, précurseur du revêtement antibuée, de préférence par évaporation sous vide, au moins une couche temporaire comprenant au moins 50 % en masse de silice, par rapport à la masse totale de la couche temporaire.

## Patentansprüche

1. Optischer Gegenstand, umfassend ein Substrat, wobei mindestens eine der Hauptoberflächen desselben mit einer ersten Beschichtung überzogen ist, die an ihrer Oberfläche Silanolgruppen aufweist, sowie eine zweite Beschichtung, die mit dieser Beschichtung in unmittelbarem Kontakt steht und eine Vorstufe einer Antibeschlagbeschichtung darstellt, wobei die zweite Beschichtung gebildet wird, indem auf die erste Beschichtung mindestens eine Verbindung A aufgebracht wird, die Folgendes aufweist:
- eine Polyoxyalkylengruppe und
- mindestens eine Gruppe, die dazu befähigt ist, eine kovalente Bindung mit einer Silanolgruppe einzugehen, **dadurch gekennzeichnet, dass** die zweite Beschichtung einen inneren Teil umfasst, innerhalb dessen die Verbindung A auf die erste Beschichtung aufgepfropft ist, sowie einen äußeren Teil, der durch Abwaschen und/oder Abwischen entfernt werden kann und sich aus dem Aufbringen der Verbindung A ergibt,
und dadurch, dass die zweite Beschichtung mit mindestens einer vorübergehend vorhandenen Schicht überzogen ist, die mindestens 50 %, vorzugsweise mindestens 60 %, besser mindestens 70 Massen-% Siliciumdioxid umfasst, bezogen auf die Gesamtmasse der vorübergehend vorhandenen Schicht.

2. Optischer Gegenstand nach Anspruch 1, **dadurch gekennzeichnet, dass** es sich bei der vorübergehend vorhandenen Schicht um die Außenschicht des optischen Gegenstands handelt, welche mit der Luft in Kontakt steht.

3. Optischer Gegenstand nach Anspruch 1 oder 2, **dadurch gekennzeichnet, dass** die Beschichtung, die eine Vorstufe der Antibeschlagbeschichtung darstellt, eine Dicke von 3 bis 100 nm und, vorzugsweise von 5 von 50 nm aufweist.

4. Optischer Gegenstand nach einem der vorhergehenden Ansprüche, **dadurch gekennzeichnet, dass** die Verbindung A ein Organosilan ist, bei dessen Gruppe, die dazu befähigt ist, eine kovalente Bindung mit einer Silanolgruppe einzugehen, es sich um ein Siliciumatom handelt, das mindestens eine hydrolysierbare Gruppe trägt.

5. Optischer Gegenstand nach Anspruch 4, **dadurch gekennzeichnet, dass** die Organosilanverbindung eine Verbindung der folgenden Formel ist:
R¹YₘSi(X)₃₋ₘ (I)
wobei es sich bei den Gruppen Y, die gleich oder verschieden sind, um einbindige organische Gruppen handelt, die über ein Kohlenstoffatom an das Silicium gebunden sind, es sich bei dem Gruppen X, die gleich oder verschieden sind, um hydrolysierbare Gruppen oder Hydroxylgruppen handelt, R¹ für eine Gruppe steht, die eine Polyoxyalkylen-Funktion umfasst, m für eine ganze Zahl steht, die gleich 0, 1 oder 2 ist.

6. Optischer Gegenstand nach einem der vorhergehenden Ansprüche, **dadurch gekennzeichnet, dass** die vorübergehend vorhandene Schicht 1 bis 10 Massen-% Aluminiumoxid umfasst, vorzugsweise 1 bis 8 %, bezogen auf die Gesamtmasse der vorübergehend vorhandenen Schicht.

7. Optischer Gegenstand nach einem der Ansprüche 1 bis 5, **dadurch gekennzeichnet, dass** die vorübergehend vorhandene Schicht aus einer Siliciumdioxidschicht besteht.

8. Optischer Gegenstand nach einem der vorhergehenden Ansprüche, **dadurch gekennzeichnet, dass** die vorübergehend vorhandene Schicht eine Dicke von 5 bis 200 nm und vorzugsweise von 10 bis 100 nm anfweist.

9. Optischer Gegenstand nach einem der vorhergehenden Ansprüche, **dadurch gekennzeichnet, dass** die Beschichtung, die eine Vorstufe der Antibeschlagbeschichtung darstellt, eine Oberflächenenergie von mindestens 15 mJ/m² aufweist.

10. Optischer Gegenstand nach einem der vorhergehenden Ansprüche, **dadurch gekennzeichnet, dass** es sich bei der Beschichtung, die an ihrer Oberfläche Silanolgruppen aufweist, um eine Antireflexbeschichtung handelt oder um eine Schicht auf Basis von Siliciumdioxid, welche auf eine abriebfeste Beschichtung aufgebracht wurde.

11. Optischer Gegenstand nach einem der vorhergehenden Ansprüche, **dadurch gekennzeichnet, dass** er eine optische Linse darstellt, vorzugsweise eine ophthalmische Linse.

12. Optischer Gegenstand nach einem der vorhergehenden Ansprüche, **dadurch gekennzeichnet, dass** die zweite Beschichtung mit einer einzigen vorübergehend vorhandenen Schicht überzogen ist, welche mindestens 50 Massen-% Siliciumdioxid umfasst, bezogen auf die Gesamtmasse der vorübergehend vorhandenen Schicht.

13. Optischer Gegenstand nach einem der vorhergehenden Ansprüche, **dadurch gekennzeichnet, dass** die zweite Beschichtung mit zwei vorübergehend vorhandenen Schichten überzogen ist, die aneinander anhaften und gleich oder verschieden sind, wobei jede vorübergehend vorhandene Schicht mindestens 50 Massen-% Siliciumdioxid umfasst, bezogen auf die Gesamtmasse dieser vorübergehend vorhandenen Schicht.

14. Verfahren zur Randbearbeitung eines optischen Gegenstands, wie er in einem der vorhergehenden Ansprüche definiert ist, **dadurch gekennzeichnet, dass** es Folgendes umfasst:
- Befestigen des optischen Gegenstands an einer Haltevorrichtung mittels eines Haftschuhs, der an der Oberfläche des optischen Gegenstands anhaftet;
- Anbringen der Haltevorrichtung, an welcher der optische Gegenstand mittels des Haftschuhs anhaftet, in einer Randbearbeitungsvorrichtung;
- Randbearbeitung des optischen Gegenstand, indem der Rand des optischen Gegenstands spanend bearbeitet wird; und
- nach dem Entnehmen des optischen Gegenstands, Entfernen der vorübergehend vorhandenen Schicht.

15. Verfahren nach Anspruch 14, **dadurch gekennzeichnet, dass** die Dicke der Beschichtung, die eine Vorstufe der Antibeschlagbeschichtung darstellt, nach dem Entfernen der vorübergehend vorhandenen Schicht höchstens 5 mm beträgt, vorzugsweise höchstens 3 mm.

16. Verfahren zur Herstellung eines optischen Gegenstands nach einem der Ansprüche 1 bis 13, das Folgendes umfasst:
a) Bereitstellen eines Substrats, wobei mindestens eine der Hauptoberflächen desselben mit einer ersten Beschichtung überzogen ist, die an ihrer Oberfläche Silanolgruppen aufweist,
b) Aufbringen auf die erste Beschichtung, vorzugsweise durch Aufdampfen im Vakuum, mindestens einer Verbindung A, die eine Polyoxyalkylengruppe und mindestens eine Gruppe, die dazu befähigt ist, eine kovalente Bindung mit einer Silanolgruppe einzugehen, aufweist, um auf diese Weise eine zweite Beschichtung zu erhalten, die eine Vorstufe einer Antibeschlagbeschichtung darstellt, wobei sie einen inneren Teil umfasst, innerhalb dessen die Verbindung A auf die erste Beschichtung aufgepfropft ist, und einen äußeren Teil, der durch Abwaschen und/oder Abwischen entfernt werden kann,
c) Aufbringen auf die zweite Beschichtung, die eine Vorstufe der Antibeschlagbeschichtung darstellt, vorzugsweise durch Aufdampfen im Vakuum, mindestens einer vorübergehend vorhandenen Schicht, die mindestens 50 % Siliciumdioxid umfasst, bezogen auf die Gesamtmasse der vorübergehend vorhandenen Schicht.

## Claims

1. An optical article comprising a substrate, at least one of the main surfaces of which is coated with a first coating comprising, at its surface, silanol groups and, in direct contact with this coating, a second coating which is a precursor for an antifog coating, the second coating being formed by deposition, on the first coating, of at least one compound A having:
- a polyoxyalkylene group, and
- at least one group capable of establishing a covalent bond with a silanol group,
**characterized in that** the second coating comprises an internal part, in which said compound A is grafted to the first coating, and an external part, which can be removed by washing and/or wiping, resulting from the deposition of the compound A,
and **in that** the second coating is coated with at least one temporary layer comprising at least 50%, preferably at least 60% and better still at least 70% by weight of silica, with respect to the total weight of the temporary layer.

2. The optical article as claimed in claim 1, **characterized in that** the temporary layer is the external layer of the optical article, in contact with the air.

3. The optical article as claimed in claim 1 or 2, **characterized in that** the precursor coating for the antifog coating has a thickness ranging from 3 to 100 nm, preferably from 5 to 50 nm.

4. The optical article as claimed in any one of the preceding claims, **characterized in that** the compound A is an organosilane, the group capable of establishing a covalent bond with a silanol group of which is a silicon atom carrying at least one hydrolyzable group.

5. The optical article as claimed in claim 4, **characterized in that** the organosilane compound is a compound of formula:
R¹YₘSi(X)₃₋ₘ (I)
in which the Y groups, which are identical or different, are monovalent organic groups bonded to the silicon via a carbon atom, the X groups, which are identical or different, are hydrolyzable groups or hydroxyl groups, R¹ is a group comprising a polyoxyalkylene functional group and m is an integer equal to 0, 1 or 2.

6. The optical article as claimed in any one of the preceding claims, **characterized in that** the temporary layer comprises from 1% to 10% by weight of alumina, preferably from 1% to 8% by weight of alumina, with respect to the total weight of the temporary layer.

7. The optical article as claimed in any one of claims 1 to 5, **characterized in that** the temporary layer consists of a layer of silica.

8. The optical article as claimed in any one of the preceding claims, **characterized in that** the temporary layer has a thickness ranging from 5 to 200 nm, preferably from 10 to 100 nm.

9. The optical article as claimed in any one of the preceding claims, **characterized in that** the precursor coating for the antifog coating has a surface energy of greater than or equal to 15 mJ/m².

10. The optical article as claimed in any one of the preceding claims, **characterized in that** the coating comprising, at its surface, silanol groups is an antireflective coating or a silica-based layer deposited on an abrasion-resistant coating.

11. The optical article as claimed in any one of the preceding claims, **characterized in that** it constitutes an optical lens, preferably an ophthalmic lens.

12. The optical article as claimed in any one of the preceding claims, **characterized in that** the second coating is coated with only one temporary layer comprising at least 50% by weight of silica, with respect to the total weight of the temporary layer.

13. The optical article as claimed in any one of the preceding claims, **characterized in that** the second coating is coated with two identical or different temporary layers that adhere to one another, each temporary layer comprising at least 50% by weight of silica, with respect to the total weight of this temporary layer.

14. A process for edging an optical article as defined in any one of the preceding claims, **characterized in that** it comprises:
- attaching the optical article to a holding device with an adhesive pad that adheres to the surface of the optical article;
- mounting the holding device, to which the optical article adheres via the adhesive pad, in an edging device;
- edging the optical article by machining the periphery of the optical article; and
- after recovering the optical article, removing the temporary layer.

15. The process as claimed in claim 14, **characterized in that** the thickness of the precursor coating for the antifog coating, after the removal of the temporary layer, is less than or equal to 5 nm, preferably less than or equal to 3 nm.

16. A process for the preparation of an optical article as claimed in any one of claims 1 to 13, comprising:
a) providing a substrate, at least one of the main surfaces of which is coated with a first coating comprising, at its surface, silanol groups,
b) depositing on said first coating, preferably by vacuum evaporation, at least one compound A having a polyoxyalkylene group and at least one group capable of establishing a covalent bond with a silanol group, so as to obtain a second coating, which is the precursor for an antifog coating, comprising an internal part, in which said compound A is grafted to the first coating, and an external part, which can be removed by washing and/or wiping,
c) depositing on the second coating, which is the precursor for the antifog coating, preferably by vacuum evaporation, at least one temporary layer comprising at least 50% by weight of silica, with respect to the total weight of the temporary layer.
